# EUROPÄISCHE PATENTSCHRIFT

(11) **EP 1 620 768 B1**
(45) Veröffentlichungstag und Bekanntmachung des Hinweises auf die Patenterteilung: **07.05.2008**
(21) Anmeldenummer: 04726855.2
(22) Anmeldetag: 10.04.2004
(51) Int. Cl.: G05B 19/418, H04L 9/18, H04L 12/403

(54) **VERFAHREN UND VORRICHTUNG ZUM STEUERN EINES SICHERHEITSKRITISCHEN PROZESSES**
METHOD AND DEVICE FOR CONTROLLING A SAFETY-CRITICAL PROCESS
PROCEDE ET DISPOSITIF PERMETTANT DE COMMANDER UN PROCESSUS CRITIQUE EN TERMES DE SECURITE

(30) Priorität: 02.05.2003 DE 10320522
(43) Veröffentlichungstag der Anmeldung: 01.02.2006
(73) Patentinhaber: Pilz GmbH & Co. KG, 73760 Ostfildern (DE)
(72) Erfinder: SEIZINGER, Dietmar, 73760 Ostfildern (DE)
(74) Vertreter: Duhme, Torsten
(86) Internationale Anmeldenummer: PCT/EP2004/003852
(87) Internationale Veröffentlichungsnummer: WO 2004/097539

(56) Entgegenhaltungen:
- DE-A- 19 928 517
- US-A- 4 638 120
- US-A- 5 307 409

## Beschreibung

Die vorliegende Erfindung betrifft ein Verfahren zum Steuern eines sicherheitskritischen Prozesses, mit den Schritten:
- Bereitstellen einer Steuereinheit zur Verarbeitung von sicherheitskritischen Prozessdaten,
- Bereitstellen einer E/A-Einheit, die mit der Steuereinheit über eine Datenübertragungsstrecke verbunden ist und
- Übertragen der Prozessdaten von der E/A-Einheit an die Steuereinheit, wobei die Prozessdaten mit Hilfe einer diversitären Mehrfachübertragung gesichert werden.

Die Erfindung betrifft ferner eine Vorrichtung zum Steuern eines sicherheitskritischen Prozesses, mit einer Steuereinheit zur Verarbeitung von sicherheitskritischen Prozessdaten und mit einer E/A-Einheit, die mit der Steuereinheit über eine Datenübertragungsstrecke verbunden ist, wobei die Steuereinheit und die E/A-Einheit dazu ausgebildet sind, Prozessdaten mit Hilfe einer diversitären Mehrfachübertragung von der E/A-Einheit an die Steuereinheit zu übertragen.

Ein solches Verfahren und eine entsprechende Vorrichtung sind aus der DE 197 42 716 A1 bekannt.

Sicherheitskritische Prozesse im Sinne der vorliegenden Erfindung sind technische Abläufe, Zusammenhänge und/oder Ereignisse, bei denen ein fehlerfreies Funktionieren sichergestellt sein muss, um eine Gefahr für Personen oder materielle Werte zu vermeiden. Es handelt sich hierbei insbesondere um die Überwachung und Steuerung von automatisiert ablaufenden Vorgängen im Bereich des Maschinen- und Anlagenbaus zur Vermeidung von Unfällen. Klassische Beispiele sind die Absicherung einer Pressenanlage, die Absicherung von automatisiert arbeitenden Robotern oder das Sicherstellen eines gefahrlosen Zustandes für Wartungsarbeiten an einer technischen Anlage. Für derartige Prozesse klassifiziert die europäische Norm EN 954-1 Sicherheitskategorien von 1 bis 4, wobei 4 die höchste Sicherheitskategorie ist. Die vorliegende Erfindung bezieht sich auf sicherheitskritische Prozesse, für die zumindest die Kategorie 3 der EN 954-1 erfüllt sein muss.

Die Steuerung von sicherheitskritischen Prozessen im Sinne der vorliegenden Erfindung erfordert es, dass die an der Steuerung beteiligten Geräte und Komponenten eine Eigenfehlersicherheit aufweisen. Dies bedeutet, dass selbst bei einem Versagen oder einem Fehler des sicherheitstechnischen Gerätes die erforderliche Sicherheit, beispielsweise für das Bedienpersonal der Maschinenanlage, erhalten bleiben muss. Daher sind sicherheitstechnische Anlagen und Geräte in aller Regel redundant aufgebaut, und sie benötigen in zahlreichen Ländern eine entsprechende Zulassung von Seiten zuständiger Aufsichtsbehörden. Im Rahmen des Zulassungsverfahrens muss der Hersteller des sicherheitstechnischen Gerätes in aller Regel nachweisen, dass die erforderliche Eigenfehlersicherheit gegeben ist, was auf Grund der umfangreichen Fehlerbetrachtungen sehr aufwändig und teuer ist.

Aus der eingangs genannten DE 197 42 716 A1 ist eine gattungsgemäße Vorrichtung bekannt, bei der die eigentliche Steuereinheit über einen sog. Feldbus mit räumlich abgesetzten E/A-Einheiten verbunden ist. An die E/A-Einheiten werden Sensoren zur Aufnahme von Prozessdaten sowie Aktoren zum Auslösen von Steuervorgängen angeschlossen. Typische Sensoren im Bereich der Sicherheitstechnik sind Not-Aus-Schalter, Schutztüren, Zwei-Hand-Schalter, Drehzahlsensoren oder Lichtschrankenanordnungen. Typische Aktoren sind Schütze, mit denen die Antriebe einer überwachten Anlage stromlos geschaltet werden, oder Magnetventile. Die E/A-Einheiten dienen in einer solchen Anordnung im Wesentlichen als räumlich verteilte Signalaufnehmer- und Signalausgabestationen, während die eigentliche Verarbeitung der Prozessdaten und die Generierung von Steuersignalen für die Aktoren in der übergeordneten Steuereinheit erfolgt. In vielen Fällen kommt als übergeordnete Steuereinheit eine sog. speicherprogrammierbare Steuerung (SPS) zum Einsatz.

Um mit einem derartigen, feldbusbasierten System sicherheitskritische Prozesse steuern zu können, muss die Datenübertragung von den E/A-Einheiten zur Steuereinheit fehlersicher gemacht werden. Es muss insbesondere sichergestellt sein, dass durch Verfälschung übertragener Prozessdaten und/oder durch einen Fehler in einer abgesetzten E/A-Einheit kein gefährlicher Zustand in der Gesamtanlage auftreten kann.

Bei dem bekannten System der DE 197 42 716 A1 erfolgt dies dadurch, dass sowohl in der übergeordneten Steuereinheit als auch in den abgesetzten E/A-Einheiten sog. sicherheitsbezogene Einrichtungen vorgesehen sind. Hierbei handelt es sich beispielsweise um die redundante Auslegung aller Signalaufnahme-, Signalverarbeitungs- und Signalausgabepfade. Die redundanten Kanäle überwachen sich gegenseitig, und die Anlage wird bei Auftreten eines Fehlers oder eines undefinierten Zustandes in einen sicheren Ruhezustand überführt, beispielsweise also abgeschaltet. Zudem werden die Prozessdaten mehrfach an die Steuerung übertragen. Bei der bekannten Vorrichtung erfolgt dies, indem die binären Prozessdaten einmal unverändert, ein zweites Mal in negierter Form und ein drittes Mal in Form einer aus den Prozessdaten abgeleiteten Prüfsumme übertragen werden. Die unterschiedliche Art der Übertragung bezeichnet man als diversitär.

Dadurch, dass bei der bekannten Anlage sicherheitsbezogene Einrichtungen sowohl in der Steuereinheit als auch in den abgesetzten E/A-Einheiten vorhanden sind, kann die eigentliche Datenübertragung über einen einkanaligen Feldbus erfolgen. Die Prozessdaten werden sowohl beim Sender als auch beim Empfänger auf Sicherheit überprüft. Nachteil dieses Ansatzes ist allerdings, dass für alle abgesetzten E/A-Einheiten die erforderliche Eigenfehlersicherheit im Rahmen der Zulassungsverfahren nachgewiesen werden muss. Dies ist entsprechend aufwändig und teuer.

Ein alternativer Ansatz besteht darin, die abgesetzten E/A-Einheiten "nicht-fehlersicher" auszuführen und statt dessen die Datenübertragungsstrecke zweikanalig, d.h. mit zwei getrennten Signalpfaden, zu realisieren. In diesem Fall hat die übergeordnete Steuereinheit, die fehlersicher ausgelegt ist, die Möglichkeit, zweikanalig auf die Prozessdaten zuzugreifen und die erforderliche Fehlerüberprüfung vorzunehmen. Nachteil dieses Ansatzes ist es, dass die gesamte Datenübertragungsstrecke zweikanalig realisiert sein muss, was einen erhöhten Verkabelungsaufwand bedeutet.

US 5,307,409 offenbart eine Vorrichtung und ein Verfahren zur Fehlerdetektion auf redundanten Signalleitungen mit Hilfe von Verschlüsselung. Auch hier wird jedoch vorgeschlagen, mehrere, parallel zueinander geführte Leitungen zur Übertragung der Daten zu verwenden, wobei die Daten auf jeder Leitung mit einem eigenen Schlüsselwort verschlüsselt werden. Die Schlüsselwörter unterscheiden sich von Leitung zu Leitung, werden im Laufe der Zeit jedoch nicht verändert.

US 4,638,120 offenbart ein Verfahren und ein System zur Übertragung von vertraulichen Daten, die mit einer Zufallszahl verschlüsselt werden. Eine fehlersichere Datenübertragungsstrecke im Sinne der vorliegenden Erfindung kann damit jedoch nicht erreicht werden.

Aus der DE 37 06 325 A1 ist eine Vorrichtung bekannt, bei der abgesetzte E/A-Einheiten zusätzlich zu dem eigentlichen Feldbus über einen separaten Abschaltpfad mit der übergeordneten Steuereinheit verbunden sind. Inwieweit die Übertragung der Prozessdaten von den E/A-Einheiten zu der Steuerung fehlersicher realisiert ist, lässt sich aus dieser Druckschrift jedoch nicht entnehmen.

Vor diesem Hintergrund ist es eine Aufgabe der vorliegenden Erfindung, ein alternatives Verfahren und eine entsprechende Vorrichtung anzugeben, die bei gleicher Sicherheitsanforderung kostengünstiger realisiert und implementiert werden können.

Diese Aufgabe wird durch ein Verfahren der eingangs genannten Art gelöst, bei dem die Prozessdaten mit einem variablen, sich stetig ändernden Schlüsselwort codiert werden, um variabel codierte Prozessdaten zu erzeugen, die zu einer determinierten Dynamik führen, und bei dem die variabel codierten Prozessdaten als Bestandteil der diversitären Mehrfachübertragung an die Steuereinheit übertragen werden.

Diese Aufgabe wird ferner durch eine Vorrichtung der eingangs genannten Art gelöst, bei der ein Codierbaustein vorhanden ist, der dazu ausgebildet ist, die Prozessdaten mit einem variablen, sich stetig ändernden Schlüsselwort zu codieren, um variabel codierte Prozessdaten zu erzeugen, die zu einer determinierten Dynamik führen, und bei der die variabel codierten Prozessdaten als Bestandteil der diversitären Mehrfachübertragung an die Steuereinheit übertragbar sind.

Die erfindungsgemäße Lösung knüpft an den aus DE 197 42 716 A1 bekannten Ansatz an, wonach die Prozessdaten im Rahmen einer diversitären Mehrfachübertragung an die Steuereinheit übertragen werden. Gemäß einem Aspekt der vorliegenden Erfindung wird die Diversität nun jedoch dadurch erreicht, dass die Prozessdaten zumindest einmal mit einem variablen Schlüsselwort codiert werden. Codierung bedeutet hier, dass die Prozessdaten, die in aller Regel als binäre Information vorliegen, mit dem variablen Schlüsselwort verknüpft werden. Es versteht sich, dass die Verknüpfung rekonstruierbar sein muss, damit die übergeordnete Steuereinheit die redundante Information aus den codierten Prozessdaten zurückgewinnen kann. Beispielsweise kann die Verknüpfung eine logische XOR-Verknüpfung der eigentlichen Prozessdaten mit dem variablen Schlüsselwort sein. Durch eine XOR-Verknüpfung wird jedes Bit der Prozessdaten verändert, ohne jedoch dass die eigentliche Information verloren geht. Alternativ könnte auch eine Addition oder eine andere Verknüpfung der Prozessdaten mit dem Schlüsselwort erfolgen, wobei die Verknüpfung vorzugsweise jedes Bit der Prozessdaten (bei binärer Darstellung) beeinflussen sollte.

Indem die zu übertragenden Prozessdaten mit einem variablen Schlüsselwort codiert werden, wird eine determinierte Dynamik erzeugt, die es ermöglicht, die Sicherheitsfunktion allein im Bereich der übergeordneten Steuereinheit zu kontrollieren. Auf Seiten der E/A-Einheit kann daher auf eine fehlersichere, bspw. also zweikanalig-redundante Auslegung verzichtet werden. Folglich kann auch der Nachweis der Fehlersicherheit für die E/A-Einheiten im Rahmen der Zulassungsverfahren entfallen.

Andererseits kann die Datenübertragung auf Grund der nun dynamischen Mehrfachübertragung weiterhin über eine einkanalige Verbindung erfolgen, was den Verdrahtungsaufwand gering hält. Die erfindungsgemäße Anordnung und das entsprechende Verfahren können damit insgesamt deutlich kostengünstiger realisiert werden.

Die genannte Aufgabe ist vollständig gelöst.

In einer Ausgestaltung der Erfindung wird das variable Schlüsselwort von der Steuereinheit erzeugt und an die E/A-Einheit übertragen.

Alternativ hierzu wäre es grundsätzlich auch möglich, das variable Schlüsselwort im Bereich der E/A-Einheit oder an anderer Stelle innerhalb der Gesamtvorrichtung zu erzeugen. Die vorliegende Ausgestaltung besitzt demgegenüber den Vorteil, dass die Steuereinheit die zentrale Kontrolle auch über das variable Schlüsselwort erhält, so dass alle sicherheitskritischen Bereiche in der Steuereinheit zusammengefasst sind. Fehlerbetrachtungen, Sicherheitsüberprüfungen und dgl. können daher auf die Steuereinheit konzentriert werden. Darüber hinaus kann die Steuereinheit als zentrale Einheit von sich aus alle E/A-Einheiten ansprechen, so dass die Verteilung der variablen Schlüsselwörter in dieser Ausgestaltung einfacher und unkomplizierter ist.

In einer weiteren Ausgestaltung wird das variable Schlüsselwort zu jedem Übertragungsvorgang von Prozessdaten an die Steuereinheit geändert.

Alternativ hierzu ist es grundsätzlich auch möglich, das variable Schlüsselwort jeweils für mehrere Übertragungen von Prozessdaten unverändert zu belassen. Durch die bevorzugte Ausgestaltung wird jedoch eine höhere Sicherheit erreicht, da die Steuereinheit auf Grund der höheren Dynamik schneller auf sicherheitskritische Zustände reagieren kann. Es versteht sich jedoch, dass bei einer Burst-artigen Übertragung von Prozessdaten an die Steuereinheit der gesamte Burst auch in dieser Ausgestaltung durch ein gemeinsames Schlüsselwort codiert sein kann, um den Datenverkehr auf der Datenübertragungsstrecke möglichst gering zu halten.

In einer weiteren Ausgestaltung liest die Steuereinheit die Prozessdaten zyklisch aus der E/A-Einheit aus.

In der Fachterminologie bezeichnet man eine solche Ausgestaltung als "polling". Alternativ hierzu gibt es auch sog. ereignis- oder interruptgesteuerte Systeme, bei denen ein Abfragen und/oder Senden von Prozessdaten nur dann erfolgt, wenn ein auslösendes Ereignis aufgetreten ist. In der bevorzugten Ausgestaltung kommen die Vorteile der Erfindung jedoch besonders deutlich zur Geltung, da in diesen Fällen die E/A-Einheiten technisch besonders einfach ausgelegt werden können. Der Material- und Entwicklungsaufwand auf Seiten der E/A-Einheiten ist damit in dieser Ausgestaltung minimal.

In einer weiteren Ausgestaltung erfolgt die Codierung der Prozessdaten in der E/A-Einheit in einem separaten Codierbaustein, der vorzugsweise eine festverdrahtete Logik besitzt.

In den bevorzugten Ausführungsbeispielen ist der separate Codierbaustein als FPGA (Field Programmable Gate Array) oder als ASIC (Application Specific Integrated Circuit) realisiert, da der im Rahmen der Zulassungsverfahren erforderliche Nachweis der Fehlersicherheit bei Hardware-basierten Lösungen einfacher ist als bei Software-basierten Lösungen. Das Vorsehen eines separaten Codierbaustein erleichtert das Zulassungsverfahren noch weiter, da der "Rest" der E/A-Einheit dann weitgehend unabhängig von der erfindungsgemäßen Codierung realisiert werden kann. Es ist damit leichter möglich, bereits vorhandene "unintelligente" bzw. nicht-sichere E/A-Einheiten auf das erfindungsgemäße Konzept aufzurüsten.

In einer weiteren Ausgestaltung ist die diversitäre Mehrfachübertragung auf eine Doppelübertragung der Prozessdaten beschränkt, die die variabel codierten Prozessdaten beinhaltet.

Mit anderen Worten beinhaltet die diversitäre Mehrfachübertragung hiernach nur die zweifache Übertragung der Prozessdaten, wobei die Prozessdaten einmal variabel codiert sind. Das zweite Mal werden die Prozessdaten vorzugsweise unverändert übertragen, da sie dann in der Steuereinheit "in Klartext" unmittelbar zur Verfügung stehen. Die Ausgestaltung besitzt den Vorteil, dass die Menge der übertragenen Daten auf ein Minimum reduziert ist, was Datenübertragungsstrecken mit geringeren Übertragungskapazitäten ermöglicht. Darüber hinaus kann die erfindungsgemäße Vorrichtung in dieser Ausgestaltung schneller reagieren, was ein erhöhtes Maß an Sicherheit darstellt. Ein besonderer Aspekt ist, dass in dieser Ausgestaltung - im Gegensatz zu praktisch allen bekannten sicherheitstechnischen Systemen - auf die Generierung und Übertragung von Prüfsummen verzichtet werden kann.

In einer weiteren Ausgestaltung beinhaltet die E/A-Einheit einen Aktorausgang sowie eine eigenständige Testeinheit für den Aktorausgang, wobei ein Testergebnis der Testeinheit als ein Prozessdatenwert an die Steuereinheit übertragen wird.

Diese Ausgestaltung macht in besonders vorteilhafter Weise von den durch die Erfindung geschaffenen Möglichkeiten Gebrauch. Zwar ist es bei Systemen mit "intelligenten" und fehlersicheren E/A-Einheiten grundsätzlich bekannt, dass diese ihre Aktorausgänge eigenständig regelmäßig auf Funktionssicherheit überprüfen. Bei Systemen mit "unintelligenten" und nicht-fehlersicheren E/A-Einheiten muss das Testen der Aktorausgänge jedoch bislang stets von der übergeordneten Steuereinheit initiiert werden. Dies vergrößert die Buslast und macht es zudem auf Grund der Signallaufzeiten der Datenübertragungsstrecke sehr schwierig, Ausschalttests mit nur geringen Ausschaltimpulsen zu realisieren. Mit der erfindungsgemäßen Lösung ist es nun möglich, dass die Steuereinheit über einen einfachen Befehl einen Ausschalttest initiiert und das Ergebnis als Prozessdatenwert einliest. Kürzeste Ausschaltimpulse können damit von der E/A-Einheit vor Ort realisiert werden, die eigentliche Auswertung der Ergebnisse erfolgt jedoch in der Steuereinheit, was die auf Seiten der E/A-Einheit erforderliche Intelligenz deutlich reduziert.

Ausführungsbeispiele der Erfindung sind in der Zeichnung dargestellt und werden in der nachfolgenden Beschreibung näher erläutert. Es zeigen:
- Fig. 1: eine schematische Darstellung einer erfindungsgemäßen Vorrichtung als Blockschaltbild,
- Fig. 2: eine schematische Darstellung einer als Eingabeeinheit arbeitenden E/A-Einheit,
- Fig. 3: eine schematische Darstellung einer bevorzugten Ausführung einer als Ausgabeeinheit arbeitenden E/A-Einheit, und
- Fig. 4: zwei vereinfachte Flussdiagramme zur Erläuterung des erfindungsgemäßen Verfahrens.

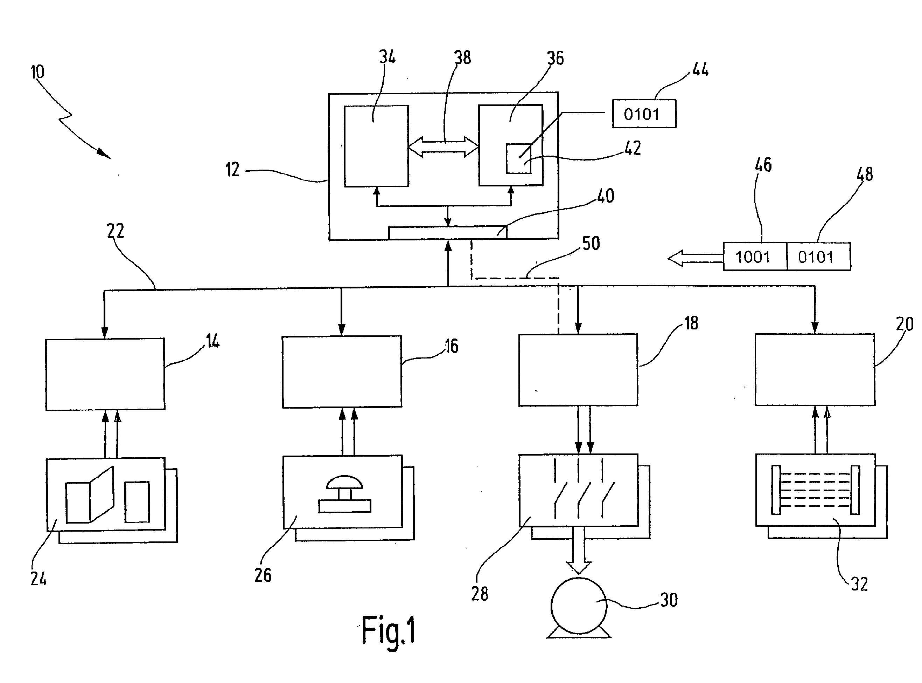

In Fig. 1 ist ein Ausführungsbeispiel einer erfindungsgemäßen Vorrichtung in seiner Gesamtheit mit der Bezugsziffer 10 bezeichnet.

Die Vorrichtung 10 beinhaltet eine Steuereinheit 12, beispielsweise eine fehlersichere SPS, wie sie von der Anmelderin der vorliegenden Erfindung unter der Bezeichnung PSS® vertrieben wird. Bevorzugt handelt es sich hierbei jedoch um eine fehlersichere Kleinsteuerung oder jede andere Art von fehlersicherer Steuereinheit im Sinne der vorliegenden Erfindung handeln (zumindest Kategorie 3 der EN 954-1 oder vergleichbare Anforderungen/Einsatzzwecke).

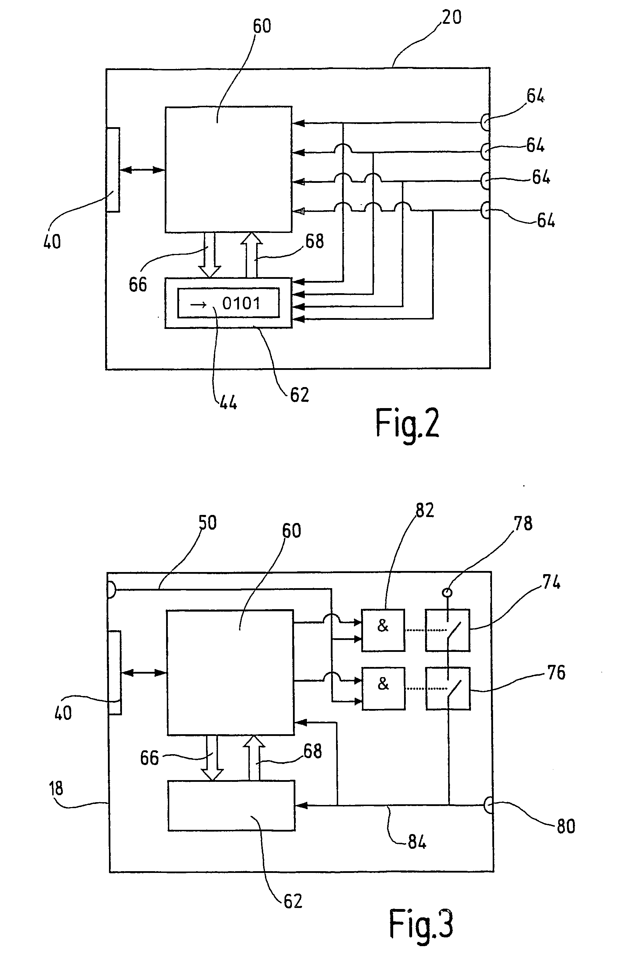

Die Vorrichtung 10 besitzt hier vier beispielhaft dargestellte E/A-Einheiten 14, 16, 18, 20, die von der Steuereinheit 12 räumlich abgesetzt sind und mit dieser über eine einkanalige Datenübertragungsstrecke 22 verbunden sind. In einem Ausführungsbeispiel handelt es sich bei der Datenübertragungsstrecke 22 um einen Feldbus. Bevorzugt ist die Übertragungsstrecke jedoch eine einfache Datenverbindung ohne spezielle Übertragungsprotokolle auf den höheren Ebenen des OSI-Referenzmodells. Die E/A-Einheiten 14-20 sind vergleichsweise unintelligente und nicht-fehlersichere Einheiten (nicht-fehlersicher = erfüllt nicht die Anforderungen der Kategorie 3 oder 4 der EN 954-1 oder vergleichbare Anforderungen), wie nachfolgend an Hand der Fig. 2 und 3 näher erläutert ist. Sie dienen im Wesentlichen zur Signalaufnahme und -ausgabe, d.h. zum Auslesen sicherheitskritischer Sensoren und zum Aktivieren sicherheitskritischer Aktoren. Beispielhaft für einen typischen Anwendungsfall sind als sicherheitskritische Sensoren mehrere Schutztüren 24, Not-Aus-Schalter 26, Schütze 28, mit denen ein Antrieb 30 fehlersicher abschaltbar ist, sowie ein Lichtgitter 32 dargestellt. Die E/A-Einheiten 14, 16 und 20 arbeiten dementsprechend als Eingabeeinheiten zur Aufnahme der Sensorsignale, während die E/A-Einheit 18 als Ausgabeeinheit zum Ansteuern der Schütze 28 dient. Abweichend von dieser vereinfachten Darstellung können die E/A-Einheiten 14-20 jedoch auch kombinierte Ein- und Ausgabeeinheiten sein.

Die Steuereinheit 12 ist in an sich bekannter Weise mehrkanalig-redundant aufgebaut, um die erforderliche Eigenfehlersicherheit zu gewährleisten. Vereinfacht für die redundanten Signalverarbeitungskanäle sind hier zwei Mikrocontroller 34, 36 dargestellt, die über eine Verbindung 38 Daten austauschen und sich somit gegenseitig kontrollieren können. Die Verbindung 38 kann beispielsweise als Dual-Ported-RAM, aber auch in jeder anderen Art und Weise realisiert sein.

Mit der Bezugsziffer 40 ist ein Busanschaltmodul bezeichnet, d.h. ein Kommunikationsinterface, über das die Mikrocontroller 34, 36 auf den Feldbus 22 zugreifen. Der gleichberechtigte Zugriff der beiden Mikrocontroller 34, 36 auf das Busanschaltmodul 40 ist hier wiederum beispielhaft zu verstehen. Den einschlägigen Fachleuten sind alternative Realisierungsmöglichkeiten bekannt.

Gemäß einem bevorzugten Aspekt der vorliegenden Erfindung besitzt die Steuereinheit 12 einen Schlüsselwortgenerator 42, der beispielsweise durch geeignete Programmierung des Mikrocontrollers 36 realisiert sein kann. Der Schlüsselwortgenerator 42 erzeugt variable Schlüsselwörter, mit denen die von den E/A-Einheiten 14-20 zu übertragenden Prozessdaten in nachfolgend erläuterter Weise codiert werden.

Die Erzeugung der variablen Schlüsselwörter kann einkanalig erfolgen, wie hier dargestellt, oder auch zweikanalig. In einem bevorzugten Ausführungsbeispiel werden die variablen Schlüsselwörter (quasi-)zufällig erzeugt, was mit an sich bekannten Zufallsgeneratoren oder -algorithmen möglich ist. Beispielhaft ist ein vierstelliges, binäres Schlüsselwort "0101" bei der Bezugsziffer 44 dargestellt.

Zum Einlesen von Prozessdaten überträgt die Steuereinheit 12 das Schlüsselwort 44 an die entsprechende E/A-Einheit (hier für die E/A-Einheit 20 dargestellt). Diese sendet anschließend die abgefragten Prozessdaten, und zwar gemäß einem bevorzugten Ausführungsbeispiel einmal "im Klartext" und ein zweites Mal in codierter Form. Beispielhaft sind die Prozessdaten in Fig. 1 als "1001" unter der Bezugsziffer 46 und die codierten Prozessdaten "0101" unter der Bezugsziffer 48 dargestellt. Die Prozessdaten 46 und 48 sind hier gemeinsamer Bestandteil eines Datentelegramms, das die E/A-Einheit 20 an die Steuereinheit 12 überträgt. Alternativ können die Prozessdaten 46 und 48 jedoch auch in getrennten Datentelegrammen an die Steuereinheit 12 übertragen werden.

Stellvertretend für ein bevorzugtes Ausführungsbeispiel sind die Prozessdaten 46 hier über eine XOR-Verknüpfung mit dem Schlüsselwort 44 codiert, was die codierten Prozessdaten 48 ergibt.

Mit der Bezugsziffer 50 ist ein zusätzlicher Abschaltpfad bezeichnet, der im Hinblick auf die Ausgabeeinheit 18 in Fig. 3 noch näher erläutert ist. Der Abschaltpfad 50 ist gemäß einem bevorzugten Ausführungsbeispiel als separate Leitung zu der E/A-Einheit 18 geführt.

Im Folgenden bezeichnen gleiche Bezugszeichen jeweils dieselben Elemente wie in Fig. 1.

In Fig. 2 ist der prinzipielle Aufbau einer bevorzugten Eingabeeinheit am Beispiel der E/A-Einheit 20 dargestellt. Die E/A-Einheit 20 beinhaltet einen (einkanaligen, damit nicht-fehlersicheren) Mikrocontroller 60 sowie einen davon getrennten Codierbaustein 62. Der Codierbaustein 62 ist gemäß einem bevorzugten Ausführungsbeispiel als FPGA oder ASIC realisiert. Alternativ hierzu kann der Codierbaustein 62 jedoch grundsätzlich ebenfalls als Mikrocontroller realisiert sein oder auch in den Mikrocontroller 60 integriert sein. Mit der Bezugsziffer 64 ist eine Vielzahl von Signaleingängen bezeichnet, über die die E/A-Einheit 20 Zustandssignale des oder der angeschlossenen Lichtgitter 32 aufnimmt. Die an den Eingängen 64 anliegenden Zustandssignale sind parallel sowohl dem Mikrocontroller 60 als auch dem Codierbaustein 62 zugeführt.

In der hier dargestellten Ausführung ist nur der Mikrocontroller 60 in der Lage, über ein Busanschaltmodul 40 auf den Feldbus 22 zuzugreifen. Daher nimmt in diesem Ausführungsbeispiel der Mikrocontroller 60 das von der Steuereinheit 12 übertragene Schlüsselwort 44 auf und überträgt es über eine Verbindung 66 an den Codierbaustein 62. Der Codierbaustein 62 verknüpft die an den Signaleingängen 64 anliegenden Daten mit dem variablen Schlüsselwort 44 und stellt die codierten Prozessdaten dem Mikrocontroller 60 über eine Verbindung 68 wieder zur Verfügung. Der Mikrocontroller 60 überträgt anschließend die von ihm direkt aufgenommenen Prozessdaten und die codierten Prozessdaten, wie dies in Fig. 1 an Hand der Bezugsziffern 46, 48 beispielhaft dargestellt ist. Eine durchgehend fehlersichere, zweikanalig-redundante Auslegung der E/A-Einheit 20 ist dabei nicht erforderlich.

In Fig. 3 ist ein bevorzugter Aufbau einer Ausgabeeinheit am Beispiel der E/A-Einheit 18 dargestellt. Die E/A-Einheit 18 besitzt ebenfalls einen Mikrocontroller 60, der für die Funktion als Ausgabeeinheit geeignet programmiert ist. Der Mikrocontroller 60 steht mit einem Codierbaustein 62 über einen Hin- und Rückkanal 66, 68 in Verbindung. Alternativ hierzu wäre es grundsätzlich auch möglich, dass der Codierbaustein 62 über das Busanschaltmodul 40 oder ein eigenes Busanschaltmodul (hier nicht dargestellt) selbst auf den Feldbus 22 zugreift.

Die E/A-Einheit 18 ist hier stellvertretend für eine Vielzahl an sich bekannter Realisierungen mit zwei redundant zueinander in Serie angeordneten Schaltelementen 74, 76 dargestellt. An einem Anschluss 78 der Serienschaltung liegt eine Betriebsspannung, die beispielsweise 24 Volt betragen kann. Ausgangsseitig sind die Schaltelemente 74, 76 auf einen Ausgang 80 geführt, an dem beispielsweise ein oder mehrere Schütze 28 angeschlossen werden können. Es versteht sich, dass die gezeigte Darstellung vereinfacht und beispielhaft ist und abweichend hiervon eine Vielzahl von Ausgängen 80 vorhanden sein kann, die über eine Vielzahl von Schaltelementen 74, 76 angesteuert werden. Der Mikrocontroller 60 öffnet die Schaltelemente 74, 76, wenn er über den Feldbus 22 einen entsprechenden Abschaltbefehl von der Steuereinheit 12 erhält.

Gemäß einem bevorzugten Ausführungsbeispiel ist hier über den Abschaltpfad 50 eine zweite Abschaltmöglichkeit realisiert. Vereinfacht ist der Abschaltpfad 50 dazu über zwei UND-Glieder 82 ebenfalls auf die Schaltelemente 74, 76 geführt. Die Steuereinheit 12 hat dadurch die Möglichkeit, auch bei Versagen des Mikrocontrollers 60 in der E/A-Einheit 18 die Schütze 28 abzuschalten.

Mit Bezugsziffer 84 ist eine Rückleseleitung bezeichnet, die sowohl dem Mikrocontroller 60 als auch dem Codierbaustein 62 zugeführt ist. Hierüber wird der Zustand der Schaltelemente 74, 76 (geöffnet oder geschlossen) überwacht. Der jeweilige Zustand ist ein Prozessdatenwert, der gemäß der vorliegenden Erfindung einmal "in Klartext" und ein zweites Mal in variabel codierter Form von der Steuereinheit 12 eingelesen wird. Dies erfolgt insbesondere, wenn die Steuereinheit 12 einen Testbefehl an die E/A-Einheit 18 überträgt, worauf diese die Schaltelemente 74, 76 kurzzeitig öffnet und anschließend wieder schließt. Das Ergebnis dieses Abschaltetests wird dann als Prozessdatenwert an die Steuereinheit 12 übertragen.

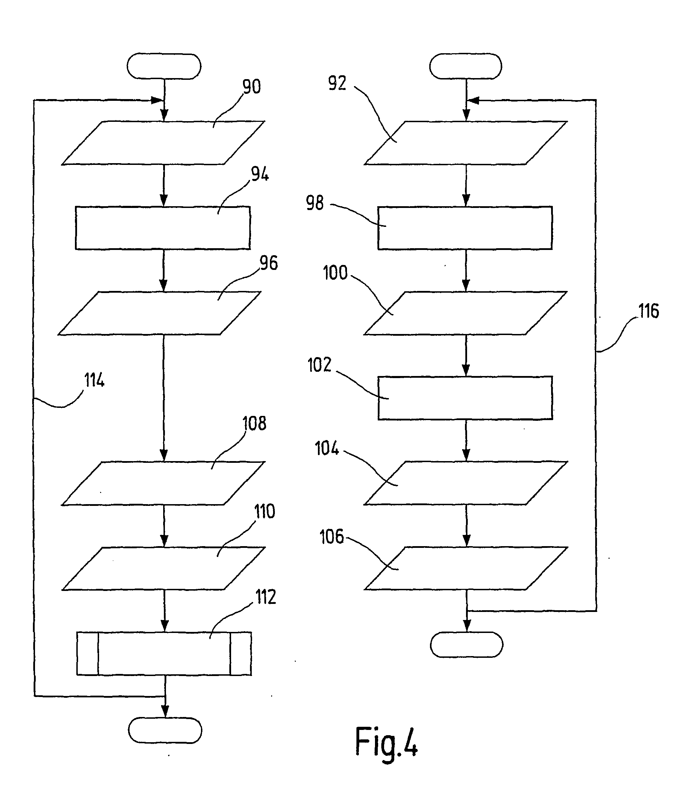

In Fig. 4 zeigt das linke Flussdiagramm schematisch den Ablauf des erfindungsgemäßen Verfahrens in der Steuereinheit 12 und das rechte Flussdiagramm den entsprechenden Ablauf in der E/A-Einheit 14-20.

Im Schritt 90 gibt die Steuereinheit 12 einen Steuerbefehl aus, der gemäß Schritt 92 von der E/A-Einheit 14-20 eingelesen wird. Gemäß Schritt 94 erzeugt die Steuereinheit 12 anschließend mit Hilfe des Schlüsselwortgenerators 42 ein variables (neues) Schlüsselwort, das gemäß Schritt 96 an die E/A-Einheit 14-20 übertragen wird. Die E/A-Einheit 14-20 führt ihrerseits den im Schritt 92 erhaltenen Steuerbefehl aus, wie es mit Bezugsziffer 98 dargestellt ist. Beispielsweise handelt es sich hierbei um das Testen der Schaltelemente 74, 76.

Im Schritt 100 liest die E/A-Einheit 14-20 das neu erzeugte Schlüsselwort ein und verschlüsselt gemäß Schritt 102 anschließend die zu übertragenden Prozessdaten. Mit den Schritten 104, 106 überträgt die E/A-Einheit 14-20 anschließend die Prozessdaten und die verschlüsselten Prozessdaten, und die Steuereinheit 12 liest diese gemäß den Schritten 108, 110 ein. Anschließend wertet die Steuereinheit 12 die erhaltenen Prozessdaten aus, was an Hand des Schrittes 112 dargestellt ist.

Beide Verfahrensabläufe wiederholen sich zyklisch, was durch die Pfeile 114, 116 dargestellt ist. Durch diesen zyklischen Ablauf, bei dem die Steuereinheit 12 die E/A-Einheiten 14-20 abfragt, wird gemäß einer bevorzugten Ausführung ein sich stetig änderndes Schlüsselwort erzeugt und an die E/A-Einheiten 14-20 übertragen. Selbst wenn sich die Prozessdaten der E/A-Einheiten 14-20 über einen langen Zeitraum hinweg nicht verändern, was für Schutztüren, Notausschalter und dgl. durchaus typisch ist, ändert sich der Datenverkehr auf dem Feldbus 22 bei jeder Abfrage, so dass die Steuereinheit 12 eine Unterbrechung der Datenverbindung, ein "Hängenbleiben" einer E/A-Einheit in einem statischen Zustand und andere Fehler erkennen kann.

## Patentansprüche

1. Verfahren zum Steuern eines sicherheitskritischen Prozesses, mit den Schritten:
- Bereitstellen einer Steuereinheit (12) zur Verarbeitung von sicherheitskritischen Prozessdaten (46, 48),
- Bereitstellen einer E/A-Einheit (14-20), die mit der Steuereinheit (12) über eine Datenübertragungsstrecke (22) verbunden ist, und
- Übertragen der Prozessdaten (46, 48) von der E/A-Einheit (14-20) an die Steuereinheit (12), wobei die Prozessdaten (46, 48) mit Hilfe einer diversitären Mehrfachübertragung gesichert werden,
**dadurch gekennzeichnet, dass** die Prozessdaten (46) mit einem variablen, sich stetig ändernden Schlüsselwort (44) codiert werden, um variabel codierte Prozessdaten (48) zu erzeugen, die zu einer determinierten Dynamik führen, und dass die variabel codierten Prozessdaten (48) als Bestandteil der diversitären Mehrfachübertragung an die Steuereinheit (12) übertragen werden.

2. Verfahren nach Anspruch 1, **dadurch gekennzeichnet, dass** das variable Schlüsselwort (44) von der Steuereinheit (12) erzeugt und an die E/A-Einheit (14-20) übertragen wird.

3. Verfahren nach Anspruch 1 oder 2, **dadurch gekennzeichnet, dass** das variable Schlüsselwort (44) zu jedem Übertragungsvorgang von Prozessdaten an die Steuereinheit (12) geändert wird.

4. Verfahren nach einem der Ansprüche 1 bis 3, **dadurch gekennzeichnet, dass** die Steuereinheit (12) die Prozessdaten (46, 48) zyklisch aus der E/A-Einheit (14-20) ausliest.

5. Verfahren nach einem der Ansprüche 1 bis 4, **dadurch gekennzeichnet, dass** die Codierung der Prozessdaten in der E/A-Einheit (14-20) in einem separaten Codierbaustein (62) erfolgt, der vorzugsweise eine festverdrahtete Logik besitzt.

6. Verfahren nach einem der Ansprüche 1 bis 5, **dadurch gekennzeichnet, dass** die diversitäre Mehrfachübertragung auf eine Doppelübertragung der Prozessdaten (46, 48), die die variabel codierten Prozessdaten (48) beinhaltet, beschränkt ist.

7. Verfahren nach einem der Ansprüche 1 bis 6, **dadurch gekennzeichnet, dass** die E/A-Einheit (14-20) einen Aktorausgang (80) sowie eine eigenständige Testeinheit für den Aktorausgang (80) beinhaltet, wobei ein Testergebnis der Testeinheit als ein Prozessdatenwert (46, 48) an die Steuereinheit (12) übertragen wird.

8. Vorrichtung zum Steuern eines sicherheitskritischen Prozesses, mit einer Steuereinheit (12) zur Verarbeitung von sicherheitskritischen Prozessdaten und mit einer E/A-Einheit (14-20), die mit der Steuereinheit (12) über eine Datenübertragungsstrecke (22) verbunden ist, wobei die Steuereinheit (12) und die E/A-Einheit (14-20) dazu ausgebildet sind, Prozessdaten (46, 48) mit Hilfe einer diversitären Mehrfachübertragung von der E/A-Einheit (14-20) an die Steuereinheit (12) zu übertragen, **dadurch gekennzeichnet, dass** ein Codierbaustein (62) vorhanden ist, der dazu ausgebildet ist, die Prozessdaten (46) mit einem variablen, sich stetig ändernden Schlüsselwort (44) zu codieren, um variabel codierte Prozessdaten (48) mit einer determinierten Dynamik zu erzeugen, und dass die variabel codierten Prozessdaten (48) als Bestandteil der diversitären Mehrfachübertragung an die Steuereinheit (12) übertragbar sind.

9. Steuereinheit zur Verwendung in einer Vorrichtung nach Anspruch 8, mit einem Teil (34, 36, 38) zur fehlersicheren Verarbeitung von sicherheitskritischen Prozessdaten (46), die von einer räumlich abgesetzten E/A-Einheit (14-20) über eine Datenübertragungsstrecke (22) empfangbar sind, **gekennzeichnet durch** einen Schlüsselwortgenerator (42), mit dem ein variables, sich stetig änderndes Schlüsselwort (44) erzeugbar und an die E/A-Einheit (14-20) übertragbar ist, wobei der Teil (34, 36, 38) zur fehlersicheren Verarbeitung der sicherheitskritischen Prozessdaten dazu ausgebildet ist, mit dem variablen Schlüsselwort codierte Prozessdaten (48) einzulesen und auszuwerten.

10. E/A-Einheit zur Verwendung in einer Vorrichtung nach Anspruch 8, mit einem Codierbaustein (62), der dazu ausgebildet ist, Prozessdaten (46) mit einem variablen, sich stetig ändernden Schlüsselwort (44) zu codieren, um variabel codierte Prozessdaten (48) mit einer determinierten Dynamik zu erzeugen.

## Claims

1. A method for controlling a safety-critical process, comprising the steps of:
- providing a control unit (12) for processing safety-critical process data (46, 48),
- providing an I/O unit (14-20) connected to the control unit (12) via a data transmission link (22), and
- transmitting the process data (46, 48) from the I/O unit (14-20) to the control unit (12), with the process data (46, 48) being protected by means of a diversitary multiple transmission,
**characterized in that** the process data (46) are encoded using a variable, constantly changing keyword (44) in order to generate variably encoded process data (48) which result in a defined dynamic behavior, and **in that** the variably encoded process data (48) are transmitted to the control unit (12) as part of the diversitary multiple transmission.

2. The method of Claim 1, **characterized in that** the variable keyword (44) is generated by the control unit (12) and transmitted to the I/O unit (14-20).

3. The method of Claim 1 or 2, **characterized in that** the variable keyword (44) is changed for every transmission of the process data to the control unit (12).

4. The method of Claims 1 to 3, **characterized in that** the control unit (12) reads the process data (46, 48) cyclically from the I/O unit (14-20).

5. The method of any of Claims 1 to 4, **characterized in that** the process data are encoded in the I/O unit (14-20) in a separate encoder chip (62) which preferably has a hard-wired logic section.

6. The method of any of Claims 1 to 5, **characterized in that** the diversitary multiple transmission is limited to double transmission of the process data (46, 48), said double transmission containing the variably encoded process data (48).

7. The method of any of Claims 1 to 6, **characterized in that** the I/O unit (14-20) comprises an actuator output (80) and a separate test unit for the actuator output (80), with a test result from the test unit being transmitted to the control unit (12) as a process data value (46, 48).

8. An apparatus for controlling a safety-critical process, comprising a control unit (12) for processing safety-critical process data and comprising an I/O unit (14-20) which is connected to the control unit (12) via a data transmission link (22), with the control unit (12) and the I/O unit (14-20) being designed to transmit process data (46, 48) from the I/O unit (14-20) to the control unit (12) by means of a diversitary multiple transmission, **characterized in that** an encoder chip (62) is provided which is designed to encode the process data (46) using a variable, constantly changing keyword (44) in order to generate variably encoded process data (48) which result in a defined dynamic behavior, and **in that** the variably encoded process data (48) can be transmitted to the control unit (12) as part of the diversitary multiple transmission.

9. A control unit for use in an apparatus of Claim 8, having a portion (34, 36, 38) for failsafe processing of safety-critical process data (46) which can be received from a physically remote I/O unit (14-20) via a data transmission link (22), **characterized by** a keyword generator (42) for generating a variable, constantly changing keyword (44) and for transmitting the keyword to the I/O unit (14-20), with the portion (34, 36, 38) for failsafe processing of the safety-critical process data being designed to read in and evaluate process data (48) encoded using the variable keyword.

10. An I/O unit for use in an apparatus of Claim 8, having an encoder chip (62) which is designed to encode process data (46) using a variable, constantly changing keyword (44) in order to generate variably encoded process data (48) having a defined dynamic behavior.

## Revendications

1. Procédé permettant de commander un processus critique en termes de sécurité, avec les étapes consistant à :
- mettre à disposition une unité de commande (12) pour le traitement de données de processus (46, 48) critiques en termes de sécurité,
- mettre à disposition une unité d'E/S (14 à 20) qui est reliée à l'unité de commande (12) par le biais d'une liaison de transmission de données (22), et
- transmettre les données de processus (46, 48) de l'unité d'E/S (14 à 20) à l'unité de commande (12), les données de processus (46, 48) étant sécurisées à l'aide d'une transmission multiple diversifiée,
**caractérisé en ce que** les données de processus (46) sont codées à l'aide d'un mot de passe (44) variable et changeant continuellement, afin de générer des données de processus (48) codées de manière variable qui conduisent à une dynamique déterminée, et **en ce que** les données de processus (48) codées de manière variable sont transmises à l'unité de commande (12) en tant qu'élément de la transmission multiple diversifiée.

2. Procédé selon la revendication 1, **caractérisé en ce que** le mot de passe variable (44) est généré par l'unité de commande (12) et transmis à l'unité d'E/S (14 à 20).

3. Procédé selon la revendication 1 ou 2, **caractérisé en ce que** le mot de passe variable (44) est modifié pour chaque cursus de transmission de données de processus à l'unité de commande (12).

4. Procédé selon l'une quelconque des revendications 1 à 3, **caractérisé en ce que** l'unité de commande (12) lit les données de processus (46, 48) en provenance de l'unité d'E/S (14 à 20) de façon cyclique.

5. Procédé selon l'une quelconque des revendications 1 à 4, **caractérisé en ce que** le codage des données de processus dans l'unité d'E/S (14 à 20) est effectué dans un codeur séparé (62) qui possède de préférence une logique câblée.

6. Procédé selon l'une quelconque des revendications 1 à 5, **caractérisé en ce que** la transmission multiple diversifiée se limite à une double transmission des données de processus (46, 48), qui comporte les données de processus (48) codées de manière variable.

7. Procédé selon l'une quelconque des revendications 1 à 6, **caractérisé en ce que** l'unité d'E/S (14 à 20) comporte une sortie (80), ainsi qu'une unité de test autonome pour la sortie (80), un résultat de test de l'unité de test étant transmis à l'unité de commande (12) en tant que valeur de donnée de processus (46, 48).

8. Dispositif permettant de commander un processus critique en termes de sécurité, avec une unité de commande (12) pour le traitement de données de processus critiques en termes de sécurité et avec une unité d'E/S (14 à 20) qui est reliée à l'unité de commande (12) par le biais d'une liaison de transmission de données (22), l'unité de commande (12) et l'unité d'E/S (14 à 20) étant réalisées pour transmettre, de l'unité d'E/S (14 à 20) à l'unité de commande (12), des données de processus (46, 48) à l'aide d'une transmission multiple diversifiée, **caractérisé en ce qu'**un codeur (62) est présent, lequel est réalisé pour coder les données de processus (46) avec un mot de passe (44) variable et changeant continuellement, afin de générer des données de processus (48) codées de manière variable avec une dynamique déterminée, et **en ce que** les données de processus (48) codées de manière variable peuvent être transmises à l'unité de commande (12) en tant qu'élément de la transmission multiple diversifiée.

9. Unité de commande destinée à une utilisation dans un dispositif selon la revendication 8, avec une partie (34, 36, 38) permettant le traitement sans risque d'erreurs de données de processus (46) critiques en termes de sécurité, qui peuvent être reçues par le biais d'une liaison de transmission de données (22) depuis une unité d'E/S (14 à 20) distante dans l'espace, **caractérisée par** un générateur de mot de passe (42), avec lequel un mot de passe (44) variable et changeant continuellement peut être généré et transmis à l'unité d'E/S (14 à 20), la partie (34, 36, 38) permettant le traitement sans risque d'erreurs des données de processus critiques en termes de sécurité étant réalisée pour lire et exploiter des données de processus (48) codées à l'aide du mot de passe variable.

10. Unité d'E/S destinée à une utilisation dans un dispositif selon la revendication 8, avec un codeur (62) qui est réalisé pour coder des données de processus (46) avec un mot de passe (44) variable et changeant continuellement, afin de générer des données de processus (48) codées de manière variable avec une dynamique déterminée.
